# EUROPEAN PATENT APPLICATION

(11) **EP 1 746 056 A2**
(43) Date of publication of application: **24.01.2007**
(21) Application number: 06014764.2
(22) Date of filing: 14.07.2006
(51) Int. Cl.: B65G 47/90

(54) **Workpiece transportation device**

(30) Priority: 21.07.2005 JP 2005210993
(71) Applicant: KAYABA INDUSTRY CO., LTD., Minato-ku, Tokyo 105-6190 (JP)
(72) Inventor: Adachi, Tetsurou c/o Kayaba Industry Co Ltd, Minato-ku Tokyo 105-6190 (JP); Kidera, Keiji c/o Kayaba Industry Co Ltd, Minato-ku Tokyo 105-6190 (JP)
(74) Representative: Grünecker, Kinkeldey, Stockmair & Schwanhäusser Anwaltssozietät

(57) **Abstract**

In a transportation device (T) which transports a workpiece (W), a chuck (H) which is capable of holding and releasing the workpiece (W) is provided on the tip end of an arm (A) that is capable of expanding and contracting. A moving/swinging mechanism (M) is provided for moving the arm (A) horizontally and swinging the arm (A) in the movement direction, and hence the workpiece (W) can be transported to and from a workbench (B1, B2) above which an obstruction exists.

## Description

### FIELD OF THE INVENTION

This invention relates to a transportation device for transporting a workpiece.

### BACKGROUND OF THE INVENTION

JPH05-016085A, published by the Japan Patent Office in 1993, discloses a workpiece transportation device in which a chuck capable of holding a workpiece is supported by a cylinder so as to be capable of movement in both a vertical direction and a horizontal direction. More specifically, the chuck is supported by a vertical cylinder which expands and contracts in the vertical direction, while the chuck and the vertical cylinder are supported by a horizontal cylinder which expands and contracts in the horizontal direction.

### SUMMARY OF THE INVENTION

In the transportation device of the prior art, when the chuck is to pick up a workpiece, the chuck is moved directly above the workpiece by driving the horizontal cylinder, whereupon the chuck is lowered to pick up the workpiece by driving the vertical cylinder.

With this transportation device, when another device exists in the space above the workpiece, the workpiece cannot be picked up, and if another device exists in the space above a transportation position at a transportation destination, the workpiece cannot be put down.

It is therefore an object of this invention to provide a transportation device which is capable of transporting a workpiece to and from a location in which an obstruction exists thereabove.

In order to achieve the above object, this invention provides a transportation device which transports a workpiece, comprising an arm which is capable of expanding and contracting, and comprises a chuck which is capable of holding and releasing the workpiece; and a moving/swinging mechanism which moves the arm horizontally and swings the arm.

The details as well as other features and advantages of this invention are set forth in the remainder of the specification and are shown in the accompanying drawings.

### BRIEF DESCRIPTION OF THE DRAWINGS

FIG. 1 is a schematic diagram of a transportation device according to this invention.

FIG. 2 is a schematic diagram of two transportation devices according to this invention, illustrating an example of their use.

FIG. 3 is similar to FIG. 2, but shows another example of use.

FIG. 4 is a side view of the transportation device.

FIG. 5 is a side view of a chuck of the transportation device when holding a workpiece.

FIG. 6 is a side view of the chuck of the transportation device having released the workpiece.

FIG. 7 is a plan view of the transportation device seen from above.

FIG. 8 is a side view of the transportation device, illustrating an operation of a moving/swinging mechanism provided in the transportation device.

### DESCRIPTION OF THE PREFERRED EMBODIMENTS

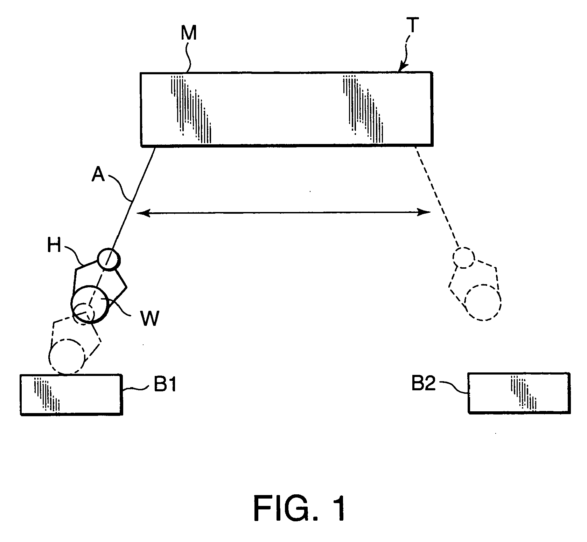

Referring to FIG. 1 of the drawings, a transportation device T according to this invention is constituted by an arm A which is capable of expansion and contraction operations and comprises a chuck H capable of holding and releasing a workpiece W, and a moving/swinging mechanism M having a function for moving the arm A horizontally and inclining the arm A.

Having moved the arm A to a left end of the figure, as shown by the solid line, the moving/swinging mechanism M is capable of swinging the arm A such that the chuck H on the tip end of the arm A moves further leftward, and of holding the arm A in an inclined state as shown by the solid line in the figure.

Similarly, having moved the arm A to a right end of the figure, the moving/swinging mechanism M is capable of swinging the arm A such that the chuck H on the tip end of the arm A moves further rightward, and of holding the arm A in an inclined state as shown by the broken line in the figure. The arm A is constituted to be capable of expanding and contracting in both of these inclined positions, as shown by the dotted line in the figure.

Hence, the transportation device T is capable of holding and transporting the workpiece W between workbenches B1 and B2 having a gap therebetween which is larger than the horizontal distance by which the arm A is moved by the moving/swinging mechanism M.

The inclined arm A enables the chuck H to access the workbenches B1 and B2 by extending chuck H. The chuck H and workpiece W are constituted such that when the arm A is inclined, the chuck H can hold the workpiece W or release the held workpiece W.

By constituting the transportation device T in this manner, the workpiece W can be transported between the workbenches B1 and B2 even when a processing machine or other obstruction exists directly above the two workbenches B1 and B2.

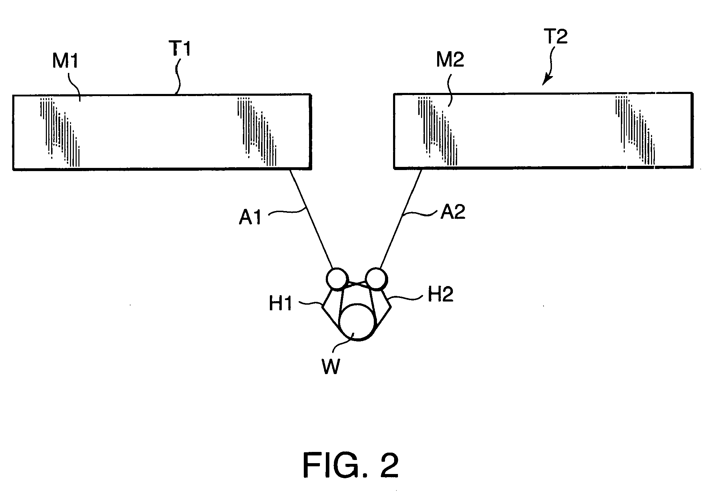

Referring to FIG. 2, when two transportation devices T1 and T2 are disposed in series, the workpiece W can be transferred as shown in the figure between a swingable arm A1 of the transportation device T1 and a swingable arm A2 of the transportation device T2. The swinging planes of the arms A1 and A2 are staggered in advance such that the arm A1 of the transportation device T1 and the arm A2 of the transportation device T2 swing on two different vertical planes. By disposing a large number of transportation devices such that the arms thereof are positioned alternately on two different vertical planes, the workpiece W can be transported over a great distance.

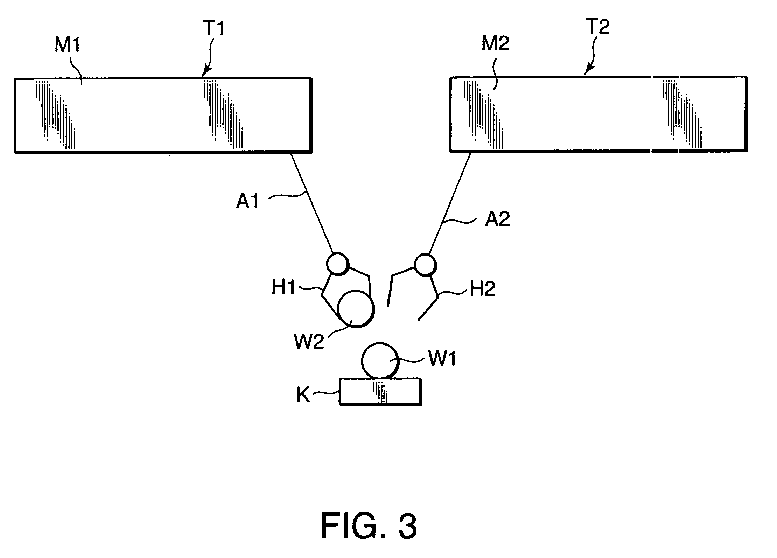

Referring to FIG. 3, here the transportation devices T1 and T2 are disposed above and to the left and right of a machine tool K. The transportation device T1 transports a workpiece W1 held by a chuck H1 on the tip end of the arm A1 from the left side of the figure to a position near the upside of the machine tool K by driving the moving/swinging mechanism M. In this position, the arm A1 is inclined toward the machine tool K and the arm A1 holding the workpiece W1 is swung toward the machine tool K.

The arm A1 is then extended from its inclined state such that the workpiece W1 is transported to a predetermined position of the machine tool K. The chuck H then releases the workpiece W1 that has been transported to the predetermined position, whereupon the arm A1 contracts and swings back to a vertical position from its inclined state. The arm A1 then moves to the left of the figure so that another workpiece W2 can be transported by driving the moving/swinging mechanism M.

Meanwhile, as the machine tool K is processing the workpiece W1, the transportation device T2 is capable of inclining the arm A2 toward the machine tool K from a position near the upside of the machine tool K, as shown in the figure, and waiting with a chuck H2 in a contracted state. When the machine tool K has finished processing the workpiece W1, the transportation device T2 extends the arm A2 toward the machine tool K, picks up the workpiece W1 using the chuck H2, and transports the workpiece W1 to the right of the figure by driving the moving/swinging mechanism M.

When the transportation device T1 transports the new workpiece W2 during processing of the workpiece W1 by the machine tool K, the transportation device T1 inclines the arm A1 toward the machine tool K and keeps the chuck H1 holding the workpiece W2 in a contracted position, as shown in the figure. After the transportation device T2 has transported the workpiece W1 processed by the machine tool K away, the transportation device T1 extends the arm A1 such that the workpiece W2 held by the chuck H1 is transported to the machine tool K.

The arms A1 and A2 are capable of waiting with the chucks H1 and H2 in an inclined state facing the machine tool K, in positions shifted respectively in the leftward and rightward directions of the figure from the upside of the machine tool K. If the arm A1, for example, is contracted in this state, the arm A2 does not interfere with the arm A1 even when extended, and conversely if the arm A2 is contracted, the arm A1 does not interfere with the arm A2 even when extended. Hence, the workpiece W1 on the machine tool K1 and the workpiece W2 held by the chuck H1 can be exchanged easily

In some cases, a workpiece is processed sequentially using a plurality of processing machines and the workpiece processing time of each processing machine is different. In such a case, the chuck can be made to wait with the arm in a contracted state, as described above, for the amount of time required to transport the workpiece to and from the processing machine that has the longest processing time and therefore causes a bottleneck in the series of processing processes. By taking this measure, the time required to exchange workpieces on the machine tool K is shortened, leading to an improvement in the overall efficiency of the processing process and a reduction in processing cost.

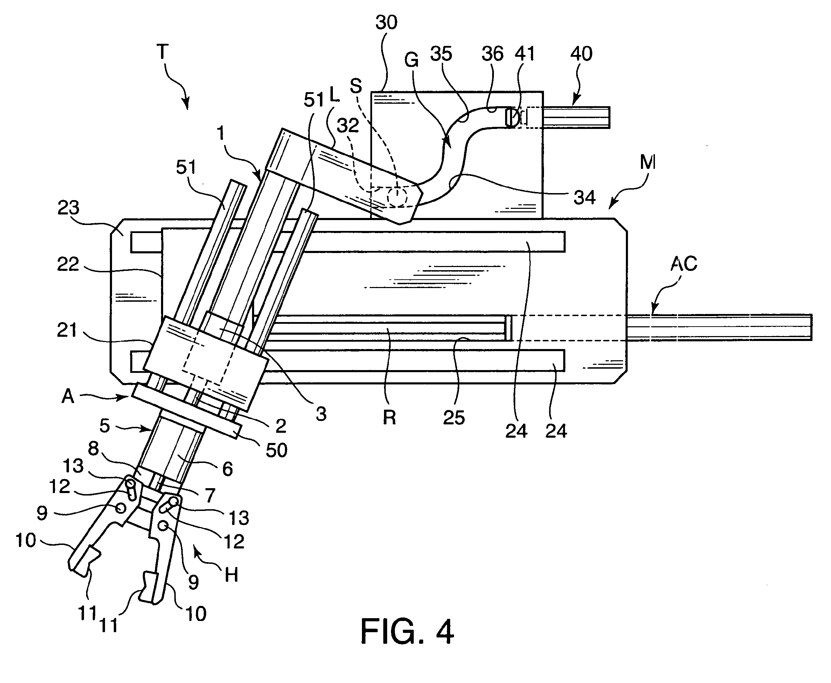

Next, referring to FIG. 4, the specific structure of the transportation device T will be described. The transportation devices T1 and T2 are structured identically to the transportation device T, and therefore the transportation device T will be described here.

Referring to FIG. 4, the transportation device T comprises the arm A supporting the chuck H, and the moving/swinging mechanism M which moves the arm A in the horizontal direction and swings the arm A.

The arm A comprises a linear actuator 1 having a cylinder 3 and a piston rod 2 projecting axially from the cylinder 3. A piston joined to the piston rod 2 is housed in the cylinder 3. The linear actuator 1 is constituted to cause the piston rod 2 joined to the piston to expand and contract relative to the cylinder 3 by supplying oil pressure to one of two oil chambers inside the cylinder 3 separated by the piston. The chuck H is supported on the tip end of the piston rod 2 via a bracket 50.

The chuck H comprises a linear actuator 5 fixed to the bracket 50, and a pair of claws 10 which are driven to open and close by the linear actuator 5.

The linear actuator 5 is constituted similarly to the linear actuator 1. In other words, the linear actuator 5 comprises a cylinder 6 and a piston rod 7 projecting axially from the cylinder 6, and causes the piston rod 7 to expand and contract relative to the cylinder 6 in accordance with a supply of oil pressure to one of two oil chambers inside the cylinder 6.

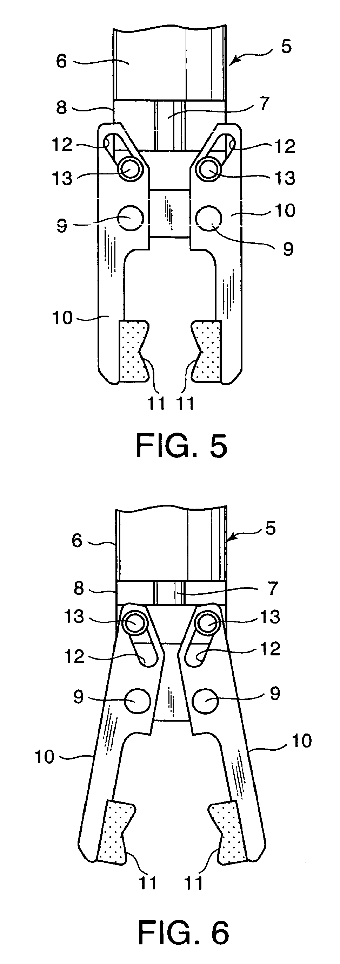

Referring to FIGs. 5 and 6, a plate 8 is fixed to the cylinder 6 parallel to the piston rod 7. Intermediate portions of the pair of claws 10 are respectively supported so as to be capable of swinging freely by a pair of pins 9 protruding from the plate 8. A pair of pins 13 is provided at the tip end of the piston rod 7 so as to protrude sideward. The base end of each claw 10 is formed with an elongated hole 12 into which the pin 13 is fitted. The elongated holes 12 are formed in symmetrical positions and such that the gap therebetween widens steadily toward the arm A. A holding portion 11 formed from rubber or the like is attached to the tip end of the claw 10.

Referring to FIG. 6, during contraction of the piston rod 7, the pins 13 move away from the pins 9 until the pins 13 are positioned at the upper end of the elongated holes 12 in the claws 10. At the upper end, the gap between the pair of elongated holes 12 is at its widest. When the pins 13 are fitted in this position of the elongated holes 12, the gap between the upper ends of the elongated holes 12 is equal to the gap between the pins 13. This state is realized by causing the tip ends of the claws 10 to rotate respectively outward using the pins 9 as fulcrums. As a result, the tip ends of the pair of claws 10 are held in an open state, or in other words a release state.

Referring to FIG. 5, during expansion of the piston rod 7. the pins 13 approach the pins 9 until the pins 13 are positioned at the lower end of the elongated holes 12 in the claws 10. At the lower end, the gap between the pair of elongated holes 12 is at its narrowest. When the pins 13 are fitted in this position of the elongated holes 12, the gap between the lower ends of the elongated holes 12 is equal to the gap between the pins 13. This state is realized by causing the tip ends of the claws 10 to rotate respectively inward using the pins 9 as fulcrums. As a result, the tip ends of the pair of claws 10 are held in a narrowed state, or in other words a holding state.

By means of the pins 13 which move within the elongated holes 12 in the claws 10 and the pins 9 supporting the claws 10, the expansion and contraction of the piston rod 7 causes the pair of claws 10 to perform opening and closing motions.

As an alternative constitution for the chuck H, the pins 13 may be formed on the plate 8 and the pins 9 may be fixed to the tip end of the piston rod 7. Likewise with this constitution, the claws 10 open and close in accordance with the expansion and contraction of the piston rod 7.

When the chuck H constituted in this manner is to pick up the workpiece W, the linear actuator 5 causes the piston rod 7 to expand. The piston rod 7 is extended in the linear actuator 5 by supplying oil pressure to an oil chamber on the opposite side of the piston rod 7. In the oil chamber on the opposite side of the piston rod 7, the pressure-receiving area of the piston is greater than that of an oil chamber on the piston rod 7 side. Hence, the linear actuator 5 can apply a large holding force to the chuck H under a small amount of oil pressure.

Referring back to FIG. 4, the tip end of the cylinder 3 of the linear actuator 1 provided in the arm A is fixed to a holder 21. The piston rod 2 penetrates the holder 21. A pair of guide rods 51 are fixed to the bracket 50 at the tip end of the piston rod 2 so as to stand upright parallel with the piston rod 2. The guide rods 51 pass respectively through a pair of through holes formed in the holder 21 and extend to the vicinity of the base end of the cylinder 3. The pair of guide rods 51 passing through the holder 21 serves to prevent axial wobbling of the piston rod 2.

The moving/swinging mechanism M comprises a plate-form beam 23. A pair of dovetail guide rails 24 is fixed horizontally to the beam 23.

The moving/swinging mechanism M further comprises a base 22 formed with horizontal grooves which have the same shape as the guide rails 24 and fit onto the guide rails 24, and an air cylinder AC which moves the base 22 horizontally along the guide rails 24. The base 22 supports the holder 21 via a pin such that the holder 21 can rotate about the pin. The air cylinder AC causes a piston rod R to expand and contract in accordance with the selective supply of compressed air to two internal operating chambers.

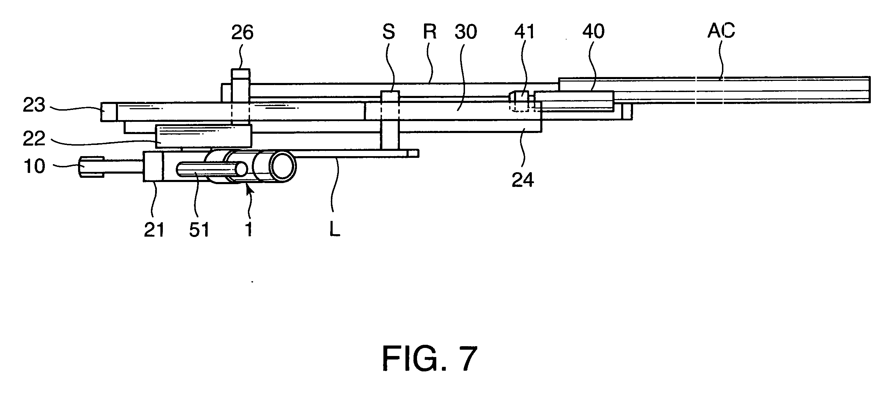

Referring to FIG. 7, the base 22 is disposed on one surface of the beam 23, while the air cylinder AC which drives the base 22 is disposed on the other surface of the beam 23. Meanwhile, a slit 25 is formed in the beam 23 parallel with the guide rails 24, and the piston rod R of the air cylinder AC is joined to the base 22 via a connecting portion 26 which penetrates the slit 25.

Returning to FIG. 4, one end of a link L is fixed to the base end of the cylinder 3 of the linear actuator 1. A slider S having a circular cross section projects sideward from the other end of the link L. The slider S is fitted into a guide slit G formed in a vertical plate 30. The vertical plate 30 is positioned on the side of the link L and fixed to the upper end of the beam 23.

The guide slit G takes a substantially S-shaped form constituted by a lower horizontal portion 32, an upper horizontal portion 36, a concave portion 34 connected to the lower horizontal portion 32, and a convex portion 35 connecting the concave portion 34 to the upper horizontal portion 36. The angles of the arc formed by the both the concave portion 34 and the convex portion 35 are ninety degrees respectively.

The slider S engages with the guide slit G such that it can slide and rotate in the guide slit G. A stopper 40 is provided at the tail end of the upper horizontal portion 36 of the guide slit G. The stopper 40 is constituted by a rod having a cushion 41 attached to the tip end thereof, and is fixed to the plate 30 by a bracket or the like. When the slider S, moving within the guide slit G, reaches the tail end of the upper horizontal portion 36, the slider S abuts against the cushion 41 of the stopper 40 such that further displacement thereof is inhibited. The cushion 41 serves to alleviate the impact of the collision between the slider S and stopper 40.

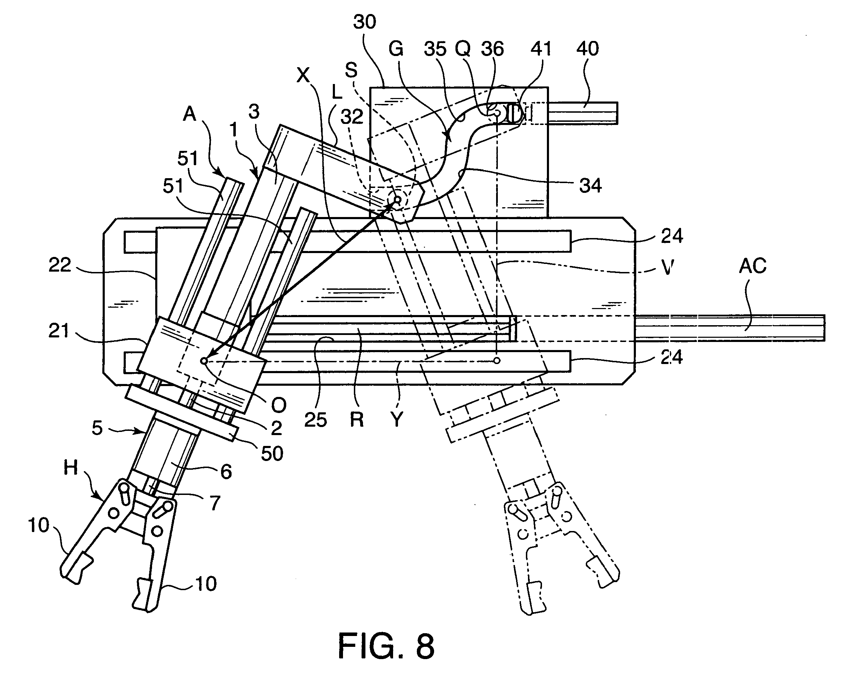

Referring to FIG. 8, as shown by the dotted lines in the figure, a vertical distance between a center Q of the slider S, the displacement of which has been inhibited by the stopper 40 in the upper horizontal portion 36 of the guide slit G, and a center O of the pin supporting the holder 21 on the base 22 is referred to as V, and a horizontal distance therebetween is referred to as Y. This position corresponds to a maximum contraction position of the air cylinder AC.

Meanwhile, as shown by the solid lines in the figure, a distance between the center of the slider S positioned at the tail end of the lower horizontal portion 32 and the center O of the pin supporting the holder 21 on the base 22 is referred to as X. This position corresponds to a maximum expansion position of the air cylinder AC. The dimensions of the guide slit G are set such that the distances X and V are equal.

When the arm A is in the position shown by the solid lines in the figure, the vertical distance between the center of the slider S and the center O of the pin supporting the holder 21 on the base 22 is shorter than the distance X, and therefore the air cylinder AC moves the center O of the pin to this position, whereby the arm A is moved from a vertical state to an inclined state in which the chuck H is rotated leftward in the figure, as shown in the figure.

When the air cylinder AC is caused to contract from this position, the base 22 is guided along the pair of guide rails 24 and thus displaced horizontally in the rightward direction of the figure. The slider S moves within the lower horizontal portion 32 in the rightward direction of the figure. While the slider S remains in the lower horizontal portion 32, the arm A is displaced horizontally in the rightward direction of the figure while maintaining its angle of incline.

When the slider S reaches the concave portion 34, the movement direction of the slider S gradually changes from a horizontal direction to a vertical direction along the arc of the concave portion 34, and in accordance therewith, the arm A rotates the chuck H on its tip end in the rightward direction of the figure so as to approach a vertical state. When the air cylinder AC contracts further such that the slider S reaches the boundary between the concave portion 34 and convex portion 35, the arm A enters a vertical state.

When the air cylinder AC contracts further, the base 22 is displaced horizontally even further in the rightward direction of the figure, and at the same time, the slider S enters the convex portion 35 such that the arm A rotates the chuck H on its tip end in the rightward direction of the figure beyond the vertical state. As the air cylinder AC contracts further thereafter, the arm A continues to rotate the chuck H on its tip end in the rightward direction of the figure.

Meanwhile, the movement direction of the slider S gradually changes from a vertical direction to a horizontal direction along the arc of the convex portion 35. In accordance therewith, the rotation of the arm A becomes slower than the rightward direction movement of the base 22. When the slider S enters the upper horizontal portion 36, the arm A stops rotating, and thereafter, the arm A moves horizontally in the rightward direction of the figure as the air cylinder AC contracts further. Finally, the slider S abuts against the cushion 41 of the stopper 40 and reaches the chain line position in the figure.

When the air cylinder AC expands, the arm A is displaced from the dotted line position to the solid line position in the figure by means of a reverse process to that described above.

As described above, in the transportation device T, the arm A moves horizontally and also swings in the movement direction, and therefore, by extending the arm A, the chuck H can be made to approach a workbench or machine tool from diagonally above and either pick up or release the workpiece W. In other words, the workpiece W can be transported to or from the workbench B even when an obstruction such as a processing machine or other device exists above the workbench or machine tool. Hence, the versatility and practicality of the transportation device can be improved.

In the transportation device T described above, the moving/swinging mechanism M realizes two operations, i.e. horizontal movement of the arm A and swinging of the arm A about the slider S, using a combination of the single air cylinder AC and the guide slit G. Hence, in comparison with a case in which horizontal movement and swinging of the arm A are performed by individual actuators, the manufacturing cost of the transportation device can be reduced.

Moreover, these operations are regulated by the guide slit G, and hence the arm A swings smoothly. Further, displacement and inclination of the arm A are regulated by the position of the slider S inside the guide slit G, and hence there is no need to provide a sensor for controlling displacement and inclination of the arm.

The contents of Tokugan 2005-210993, with a filing date of July 21, 2005 in Japan, are hereby incorporated by reference.

Although the invention has been described above by reference to certain embodiments of the invention, the invention is not limited to the embodiments described above. Modifications and variations of the embodiments described above will occur to those skilled in the art, within the scope of the claims.

For example, in the transportation device T, the constitution of the chuck H may be modified in various ways.

The shape of the guide slit G may also be modified in various ways. In the above embodiment, the angles of the arc formed by the concave portion 34 and the convex portion 35 are both set at ninety degrees such that the concave portion 34 and convex portion 35 are connected on a vertical line, but the angles of these arcs may be set smaller A guide rail may be provided instead of the guide slit G and the slider S may be engaged with the guide rail such that it can slide on the guide rail while rotating at any of the slide positions.

In the above embodiment, the slider S is positioned in the lower horizontal portion 32 in the maximum expansion position of the air cylinder AC and in the upper horizontal portion 36 in the maximum contraction position of the air cylinder AC. By reversing the direction in which the base 22 is driven by the air cylinder AC, the slider S is positioned in the lower horizontal portion 32 when the air cylinder AC is in the maximum contraction position and in the upper horizontal portion 36 when the air cylinder AC is in the maximum expansion position.

Similar effects are obtained by reversing the direction in which the slider S shifts from the cylinder 3 and making the shape of the guide slit G left/right symmetrical to the shape shown in FIG. 8. Thus, the shape of the guide slit G, the direction of the link L, and the orientation of the air cylinder AC can be combined in various ways.

The length of the lower horizontal portion 32 and upper horizontal portion 36 may be set arbitrarily in accordance with the horizontal movement distance required of the arm A. The length of the link L may be set arbitrarily in accordance with the swinging angle required of the arm A.

The moving/swinging mechanism M drives the base 22 using the air cylinder AC, but the air cylinder AC is also capable of driving the slider S. More specifically, the slider S is hinged to one end of the air cylinder AC and the other end of the air cylinder AC is hinged to the beam 23. The air cylinder AC swings relative to the beam 23 as the slider S is displaced in an up-down direction, thereby causing the arm A to move horizontally and swing.

The air cylinder AC may be replaced by a motor and ball screw combination or another linear actuator.

Moreover, this invention is not limited to the constitution of the moving/swinging mechanism M. The subject matter of this invention is the horizontal movement and swinging of the arm A and does not exclude a moving/swinging mechanism which performs horizontal movement and swinging using individual actuators.

The embodiments of this invention in which an exclusive property or privilege is claimed are defined as follows:

## Claims

1. A transportation device (T) which transports a workpiece (W), comprising:
an arm (A) which is capable of expanding and contracting, and comprises a chuck (H) which is capable of holding and releasing the workpiece (W); and
a moving/swinging mechanism (M) which moves the arm (A) horizontally and swings the arm (A).

2. The transportation device (T) as defined in Claim 1, wherein the moving /swinging mechanism (M) is configured to swing the arm (A) on a vertical plane including a movement direction of the arm (A).

3. The transportation device (T) as defined in Claim 1 or Claim 2, wherein the moving/swinging mechanism (M) comprises a base (22) which is hinged to the arm (A) and driven by an actuator (AC) to be displaced in a horizontal direction, and a guide (G) which guides a specific point (S) on the arm (A) along a substantially S-shaped path.

4. The transportation device (T) as defined in Claim 3, wherein the moving/swinging mechanism (M) further comprises a pair of horizontal guide rails (24) which guide the base (22).

5. The transportation device (T) as defined in Claim 3 or Claim 4, wherein the specific point (S) is set on a link (L) attached to the arm (A).

6. The transportation device (T) as defined in Claim 5, wherein the guide (G) is constituted by a guide slit (G) formed in a substantially S-shaped form on a vertical plate (30), and the specific point (S) is constituted by a slider (S) which projects from the link (L) and engages with the guide slit (G) so as to be capable of movement along the guide slit (G) and rotary displacement within the guide slit (G).

7. The transportation device (T) as defined in Claim 6, wherein the guide slit (G) comprises a lower horizontal portion (32), a concave portion (34) extending upward from the lower horizontal portion (32), a convex portion (35) extending upward from the concave portion(34), and an upper horizontal portion (36) continuous with the convex portion (35).

8. The transportation device (T) as defined in Claim 1 or Claim 2, wherein the moving/swinging mechanism (M) comprises a base (22) which is hinged to the arm (A) and capable of displacement in a horizontal direction, a guide (G) which guides a specific point (S) on the arm (A) along a predetermined path, and an actuator (AC) which drives the specific point (S) in accordance with the guide (G).
